# EUROPÄISCHE PATENTSCHRIFT

(11) **EP 2 858 832 B1**
(45) Veröffentlichungstag und Bekanntmachung des Hinweises auf die Patenterteilung: **24.08.2016**
(21) Anmeldenummer: 13728999.7
(22) Anmeldetag: 05.06.2013
(51) Int. Cl.: B60C 1/00, C08K 5/372, C08K 5/39, C08K 5/5419, C08L 21/00, C07C 333/30, C07C 321/00

(54) **KIESELSÄUREHALTIGE KAUTSCHUKMISCHUNGEN MIT SCHWEFELHALTIGEN ADDITIVEN**
RUBBER BLENDS CONTAINING SILICIC ACID AND COMPRISING ADDITIVES CONTAINING SULPHUR
MÉLANGES DE CAOUTCHOUCS CONTENANT DE L'ACIDE SILICIQUE ET RENFERMANT DES ADDITIFS SOUFRÉS

(30) Priorität: 06.06.2012 EP 12170991
(43) Veröffentlichungstag der Anmeldung: 15.04.2015
(73) Patentinhaber: LANXESS Deutschland GmbH, 50569 Köln (DE)
(72) Erfinder: FELDHUES, Ulrich, 51465 Bergisch Gladbach (DE); UNTERBERG, Heinz, 41540 Dormagen (DE); WEIDENHAUPT, Hermann-Josef, 50259 Pulheim (DE); WIEDEMEIER-JARAD, Melanie, 41540 Dormagen (DE)
(86) Internationale Anmeldenummer: PCT/EP2013/061615
(87) Internationale Veröffentlichungsnummer: WO 2013/182610

(56) Entgegenhaltungen:
- EP-A1- 0 731 132
- EP-A1- 0 960 906
- EP-A1- 1 000 968

## Beschreibung

Die vorliegende Erfindung betrifft kieselsäurehaltige Kautschukmischungen, die schwefelhaltige Additive enthalten, Verfahren zur Herstellung dieser Kautschukmischung, deren Verwendung und daraus hergestellte Kautschukvulkanisate und eine Additiv-Mischung für Kautschuk.

Zur Herstellung von Reifen mit verringertem Rollwiderstand sind eine Reihe von Lösungsvorschlägen ausgearbeitet worden. In DE-A 2 255 577 und 4 435 311, EP-A1 0 0670 347 sowie US-A-4 709 065 sind bestimmte polysulfidische Silane als Verstärkungsadditive für kieselsäurehaltige Kautschukvulkanisate beschrieben worden. Nachteilig bei der Verwendung der dort beschriebenen polysulfidischen Silane als Verstärkungsadditive für kieselsäurehaltige Kautschukvulkanisate ist jedoch, dass zur Erreichung einer akzeptablen Verarbeitbarkeit relativ große Mengen der teuren polysulfidischen Silane erforderlich sind und dass die Härte unbefriedigend ist.

Zur Verbesserung der Verarbeitbarkeit von kieselsäurehaltigen Kautschukmischungen wurden weitere Zusatzstoffe vorgeschlagen, wie Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100% bis 300%) oder auch die Härte der Vulkanisate vermindern, so dass die verstärkende Wirkung des Füllstoffes Einbuße erleidet. Eine zu geringe Härte oder Steifigkeit des Vulkanisates resultiert aber in unbefriedigendes Fahrverhalten des Reifens besonders in Kurven.

Eine Erhöhung der Dosierung des verstärkenden Füllstoffes führt zu einer Erhöhung der Härte des Vulkanisates, nachteilig ist aber die höhere Mischungsviskosität für die Verarbeitbarkeit, gleiches gilt für eine Reduktion des Weichmacheröles.

In der EP 1 134 253 werden Polyetheradditive für kieselsäurehaltige Kautschukvulkanisate beschrieben, die den o. g. Nachteil der Verminderung des Spannungswertes nicht zeigen. Allerdings benötigt der Fachmann eine Einsatzmenge von 8 Gew.-% des Produktes bezogen auf den Kautschuk, um den Shore A Härte Wert um 3 Einheiten zu erhöhen. Nachteilig ist der niedrige Spannungswerte bei 300% Dehnung.

In der EP 0 489 313 werden Additive mit guten mechanischen Eigenschaften und verbessertem Hystereseverhalten beschrieben. Die Beispiele zeigen aber nur eine geringe oder keine Erhöhung der Härte Shore A im Vergleich zum Stand der Technik, dem Bis-[-3-(triethoxysilyl)-propyl]-tetrasulfide gem. DE-OS 2 255 577 und damit keine Verbesserung der Wechselwirkung zwischen Polymer und Füllstoff.

Des Weiteren wird in der EP 1 000 968 ein Bis-[-3-(triethoxysilyl)-propyl]-tetrasulfide in Kombination mit einem speziellen Reversionsschutzmittel in SBR eingesetzt, wobei die Modul 300-Werte sehr niedrig und damit unzureichend sind..

In der EP 0 791 622 B1 wird eine Kautschukzusammensetzung mit mind. einem Elastomer auf Dien-Basis, aus Kieselsäure und Ruß zusammengesetztem Füllstoff einem Kieselsäure-Kuppler, ausgewählt aus
(i) Tetrathiodipropanolpolysulfid-Mischung oder
(ii) Kombination aus Tetrathiodipropanolpolysulfid und Bis(3-trialkoxysilylalkyl)polysulfid beschrieben. Insbesondere ist die Menge an Tetrathiodipropanolpolysulfid deutlich größer als die Menge an Bis(3-trialkoxysilylalkyl)polysulfid, was wirtschaftlich nicht vorteilhaft ist, da das Tetrathiodipropanolpolysulfid relativ teuer ist. Zudem zeigen diese Mischung sehr niedrige Zugfestigkeitswerte auf. Es lässt darauf schließen, dass diese Mischung zu weich ist (wie die gemessenen Shore A-Werte belegen), dass sich in einem schlechteres Fahrverhalten des Reifens sowie eine Verkürzung der Lebensdauer widerspiegelt.

Aufgabe der vorliegenden Erfindung ist es, Kautschukmischungen bereitzustellen, die eine spezielle Zusatzstoffkombination aufweisen, die die Fließfähigkeit von Kautschukmischungen nicht verschlechtern und daraus hergestellte Vulkanisate mit guten Eigenschaften liefern, insbesondere im Hinblick auf Rollwiderstand, Abrieb und Naßrutschverhalten bei Reifen, Härte bzw. Steifigkeit des Vulkanisates, was zur Verbesserung des Fahrverhaltens von Reifen führen kann.

Überraschend wurde nun gefunden, dass in Kombination mit schwefelhaltigen Alkoxysilanen 1,6-Bis(N,N-dibenzylthiocarbamoyldithio)hexan (CAS-Nr.: 151900-44-6) und bestimmte schwefelhaltige Additive die Fließfähigkeit von Kautschukmischungen nicht negativ beeinflussen und zu Vulkanisaten mit gutem dynamischen Verhalten, kürzerer Anvulkanisationszeit, guter Härte/Steifigkeit, deutlich verbessertem Rollwiderstand und besonders zu weniger Abrieb führen. Die Ausvulkanisationszeit wird zudem deutlich verbessert.

Es wird vermutet, dass der synergetische Effekt aufgrund einer verbesserten Wechselwirkung zwischen Polymer und Füllstoff entsteht.

Gegenstand der Erfindung sind daher Kautschukmischungen, hergestellt aus mindestens einem Kautschuk, einem schwefelhaltigen Alkoxysilan, einem Vernetzer, einem Füllstoff, gegebenenfalls weiteren Kautschukhilfsprodukten, sowie mindestens einem schwefelhaltigen Additiv der Formel (I)

A-S-(S)ₓ-S-B Formel (I)

worin x für 0, 1, 2, 3 oder 4 steht,

A für einen Rest 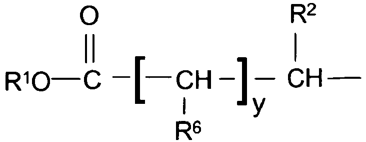 und
B für einen Rest 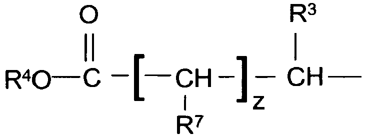 mit
R¹ bis R⁴ gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, -COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und
R⁶ bis R⁷ gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, -COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und
y, z unabhängig voneinander für 0, 1 oder 2 stehen bzw.

A und B unabhängig voneinander für einen der Reste 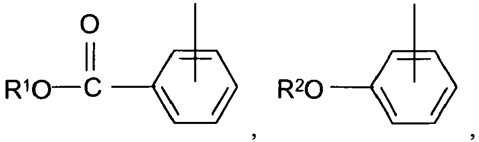 steht,
worin R¹ und R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, -COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und 0,1 bis 15 Gewichtsteile, bezogen auf 100 Gewichtsteile an eingesetztem Kautschuk 1,6-Bis(N,N-dibenzylthiocarbamoyl-dithio)hexan (CAS-Nr.: 151900-44-6).

Als Polysulfid-Additiv wird vorzugsweise wenigstens eine der Verbindungen der Formel (II), verwendet, 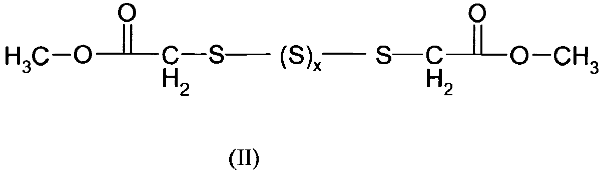 worin
x für 0, 1, 2, 3 oder 4 steht, besonders bevorzugt für 2 steht.

Bevorzugt als Polysulfid-Additiv wird wenigstens eine der Verbindungen der Formel (IIa) verwendet, 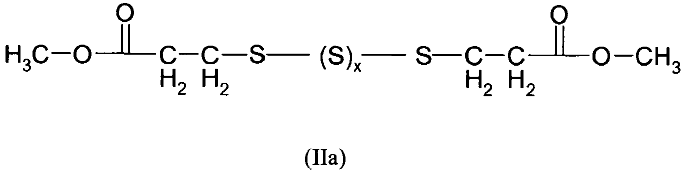 worin x für 0, 1, 2, 3 oder 4 steht, besonders bevorzugt für 2 steht.

Bevorzugt als Polysulfid-Additiv wird wenigstens eine der Verbindungen der Formeln (III), (IIIa), (IIIb) verwendet, 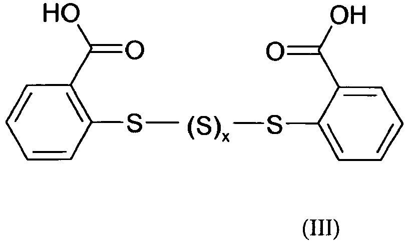 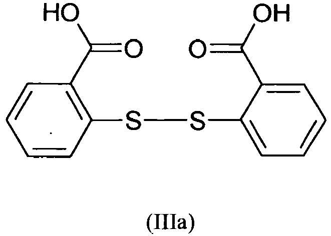 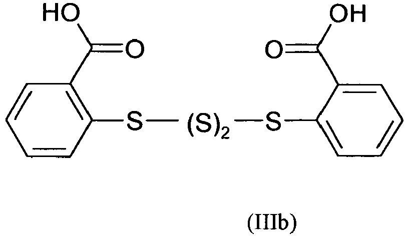 worin x für 0, 1, 2, 3 oder 4 steht, besonders bevorzugt für 2 steht.

Bevorzugt als Polysulfid-Additiv wird wenigstens eine Verbindung der Formel (IV) verwendet, 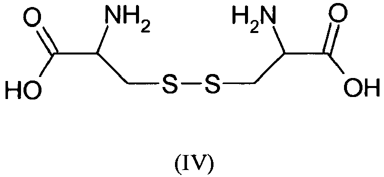 , besonders bevorzugt das L-Cystin, CAS-Nr.: 56-89-3.

Die Zugabe des erfindungsgemäß zu verwendenden Kautschukadditivs 1,6-Bis(N,N-dibenzylthiocarbamoyl-dithio)hexan (CAS-Nr.: 151900-44-6) sowie von mindestens einem schwefelhaltigen Additiv der Formel (I), sowie die Zugabe von gegebenenfalls weiteren Zusatzstoffen erfolgt bevorzugt im ersten Teil des Mischprozesses bei Massetemperaturen von 120-200°C; sie kann jedoch auch später bei tieferen Temperaturen (20-120°C) zum Beispiel mit Schwefelvernetzer und/oder Beschleuniger erfolgen. Dabei kann das erfindungsgemäße Additiv direkt als Mischung der Komponenten 1,6-Bis(N,N-dibenzylthiocarbamoyl-dithio)hexan (CAS-Nr.: 151900-44-6) sowie mindestens einem schwefelhaltigen Additiv der Formel (I) oder in Form der einzelnen Komponenten zugegeben werden.

Weitere bevorzugte Polysulfid-Additive sind in den Beispielen aufgeführt.

Bevorzugt enthält die erfindungsgemäße kieselsäurehaltige Kautschukmischung mindestens einen SBR-Kautschuk und mindestens einen BR-Kautschuk.

Vorzugsweise weist sie mindestens einen SBR-Kautschuk und mindestens einen BR-Kautschuk im Gewichts-Verhältnis SBR:BR= 60:40 bis 90:10 auf.

Zusätzlich kann sie bevorzugt mindestens einen NR-Kautschuk enthalten.

Bevorzugt weist sie wenigstens einen SBR-Kautschuk und wenigstens einen BR-Kautschuk und wenigstens einen NR-Kautschuk im Verhältnis mindestens 60 und maximal 85 Gewichtsprozente SBR bezogen auf Kautschuk und mindestens 10 und maximal 35 Gewichtsprozente BR bezogen auf Kautschuk und mindestens 5 und maximal 20 Gewichtsprozente NR bezogen auf Kautschuk auf.

Für die Herstellung der erfindungsgemäßen Kautschukmischungen und der erfindungsgemäßen Kautschukvulkanisate eignen sich neben Naturkautschuk auch Synthesekautschuke. Bevorzugte Synthesekautschuke sind beispielsweise bei W. Hofmann, Kautschuktechnologie, Genter-Verlag, Stuttgart 1980, beschreiben.

Sie umfassen u.a.
- BR-: Polybutadien
- ABR-: Butadien/Acrylsäure-C1-C4-alkylester-Copolymerisat
- CR-: Polychloropren
- IR-: Polyisopren
- SBR-: Styrol/Butadien-Copolymerisate mit Styrolgehalten von 1 - 60, vorzugsweise 20 - 50 Gew-%
- IIR-: Isobutylen/Isopren-Copolymerisate
- NBR-: Butadien(Acrylnitril-Copolymerisate mit Acrylnitrilgehalten von 5-60, vorzugsweise 10 - 50 Gew.-%
- HNBR-: teilhydrierter oder vollständig hydrierter NBR-Kautschuk
- EPDM-: Ethylen/Propylen/Dien-Copolymerisate
sowie Mischungen dieser Kautschuke.

Vorzugsweise weist die erfindungsgemäße kieselsäurehaltige Kautschukmischung nach 0,3 bis 7 Gewichtsteile eines oder mehrerer Polysulfid Additive der Formel (I) bzw. alle daraus folgenden Formel, wie in den Ansprüchen aufgeführt, bezogen auf 100 Gewichtsteile eingesetztem Kautschuk und 0,3 bis 7 Gewichtsteile 1,6-Bis(N,N-dibenzylthiocarbamoyl-dithio)hexan (CAS-Nr.: 151900-44-6), bezogen auf 100 Gewichtsteile eingesetztem Kautschuk, auf.

Bevorzugt ist die Menge an schwefelhaltigen Alkoxysilan größer oder gleich der Menge des Polysulfid Additivs der Formel (I).

Bevorzugt wird das schwefelhaltige Alkoxysilan zum Polysulfid Additiv der Formel (I) im Gewichtsverhältnis 1,5:1 bis 20:1, besonders bevorzugt 5:1 bis 15:1 eingesetzt.

Die erfindungsgemäße Kautschukmischung enthält vorzugsweise 0,5 bis 5 Gew.-Teile, bezogen auf 100 Gewichtsteile an eingesetztem Kautschuk eines Polysulfid Additivs der Formel (I) und vorzugsweise 0,5 bis 5 Gew.-Teile 1,6-Bis(N,N-dibenzylthiocarbamoyldithio)hexan (CAS-Nr.: 151900-44-6), bezogen auf 100 Gewichtsteile an eingesetztem Kautschuk.

Ein weiterer Gegenstand der vorliegenden Erfindung sind Kautschukvulkanisate, die sich aus den erfindungsgemäßen Kautschukmischungen herstellen lassen.

Ein weiterer Gegenstand der vorliegenden Erfindung ist ein Verfahren zur Herstellung von gefüllten Kautschukvulkanisaten, das dadurch gekennzeichnet ist, dass man
i) mindestens einen Kautschuk mit
ii) 10 - 150, vorzugsweise 30 - 120 Gew.-%, bezogen auf Kautschuk (i), Füllstoff und
iii) 0,1 - 15, vorzugsweise 0,3 - 7 Gew.-%, bezogen auf Kautschuk (i), Polysulfid Additive der Formel (I) und
iv) 0,1 - 15, vorzugsweise 0,3 - 7 Gew.-% 1,6-Bis(N,N-dibenzylthiocarbamoyl-dithio)hexan (CAS-Nr.: 151900-44-6), bezogen auf Kautschuk (i) bei Massetemperaturen von mindestens 120°C und bei Scherraten von 1 - 1000 sec (exp.-1), bevorzugt 1 - 100 sec (exp.-1), mischt und anschließend nach Zugabe weiterer Vulkanisationschemikalien in üblicher Weise vulkanisiert.

Die Zugabe der erfindungsgemäßen Polysulfid Additive der Formel (I) sowie die Zugabe von 1,6-Bis(N,N-dibenzylthiocarbamoyldithio)hexan (CAS-Nr.: 151900-44-6) erfolgt bevorzugt im ersten Teil des Mischprozesses bei Massetemperaturen von 100 - 200 °C bei den erwähnten Scherraten, sie kann jedoch auch später bei tieferen Temperaturen (40 - 100°C) z.B. zusammen mit Schwefel und Beschleuniger erfolgen.

Die Polysulfid Additive der Formel (I) und 1,6-Bis(N,N-dibenzylthiocarbamoyldithio)hexan (CAS-Nr.: 151900-44-6) können unabhängig voneinander sowohl in reiner Form als auch aufgezogen auf inerten, organischen oder anorganischen Trägern dem Mischprozess zugeben werden. Bevorzugte Trägermaterialien sind Kieselsäure, natürliche oder synthetische Silikate, Aluminiumoxid und/oder Ruße.

Die Polysulfid Additive der Formel (I) können auch als Mischung mit 1,6-Bis(N,N-dibenzylthiocarbamoyldithio)hexan (CAS-Nr.: 151900-44-6) dem Mischprozeß zugegeben werden.

Als kieselsäurehaltige Füllstoffe im Sinne dieser Erfindung kommen für die erfindungsgemäßen Kautschukmischung und Kautschukvulkanisate folgende Füllstoffe in Frage:
- hochdisperse Kieselsäure, hergestellt z.B. durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.
- Synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm,
- Natürliche Silikate, wie Kaolin und andere natürliche vorkommende Kieselsäuren,
- Glasfasern und Glasfaserprodukte (Matten, Stränge) oder Mikroglaskugeln.

Als weitere Füllstoffe können Russe verwendet werden. Die hierbei zu verwendenden Russe sind z.B. nach dem Flammruß, Furnace- oder Gasruß-Verfahren hergestellt und besitzen BET-Oberflächen von 20 - 200 m²/g, wie SAF-, ISAF-, IISAF-, HAF-, FEF-, oder GPF-Russe.

Die Polysulfid Additive der Formel (I) werden bevorzugt in Mengen von 0,3 bis 7 % bezogen auf Kautschuk, in den erfindungsgemäßen Kautschukmischungen eingesetzt.

Eine besonders bevorzugte Variante besteht in der Kombination von Kieselsäure, Ruß und Polysulfid Additiven der Formel (I). Bei dieser Kombination kann das Verhältnis von Kieselsäure zu Ruß in beliebigen Grenzen variiert werden. Aus reifentechnischer Sicht werden Kieselsäure:Ruß-Verhältnis von 20 : 1 bis 1,5 : 1 bevorzugt.

Als schwefelhaltige Silane für die erfindungsgemäße Kautschukvulkanisate kommen bevorzugt Bis-(triethoxysilylpropyl)-tetrasulfan und das -disulfan sowie 3-Triethoxysilyl)-1-propanthiol oder Silane wie Si 363 der Evonik, Deutschland oder Silan NXT bzw. NXT Z der Momentive (früher GE, USA), wobei der Alkoxy-Rest Methoxy oder Ethoxy bedeutet in Einsatzmengen von 2 bis 20 Gew.-Teilen, bevorzugt 3-11 Gew.-Teilen jeweils berechnet als 100%iger Wirkstoff und bezogen auf 100 Gew.-Teile Kautschuk, in Frage. Es können aber auch Mischungen aus diesen schwefelhaltigen Silanen eingesetzt werden. Flüssige Schwefelhaltige Silane können zur besseren Dosierbarkeit und/oder Dispergierbarkeit auf einem Träger aufgezogen sein (dry liquid). Der Wirkstoffgehalt liegt zwischen 30 und 70 Gew.-Teilen, bevorzugt 40 und 60 Gew.-Teilen je 100 Gew.-Teile dry liquid.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Gummiindustrie bekannt sind.

Die Kautschukhilfsprodukte werden in üblicher Menge, die sich u.a. nach dem Verwendungszweck der Vulkanisate richten, eingesetzt. Übliche Mengen sind 0,1 bis 30 Gew.-%, bezogen auf Kautschuk.

Als Vernetzungsmittel werden eingesetzt Peroxide, Schwefel, Magnesiumoxid, Zinkoxid, denen noch die bekannten Vulkanisationsbeschleuniger, wie Merkaptobenzothiazole, -sulfenamide, Thiurame, Thiocarbamate, Guanidine, Xanthogenate und Thiophosphate zugesetzt werden können. Bevorzugt ist Schwefel.

Die Vernetzungsmittel und Vulkanisationsbeschleuniger werden in Mengen von ca. 0,1 bis 10 Gew-%, bevorzugt 0,1 bis 5 Gew-%, bezogen auf Kautschuk, eingesetzt.

Wie bereits oben erwähnt, ist es gegen die Einwirkung von Wärme und Sauerstoff vorteilhaft Alterungsschutzmittel der Kautschukmischung hinzuzugeben. Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, können auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt werden. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD) sind.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem für NBR-Typen verwendet, die peroxidisch vulkanisiert werden.

Die Ozonbeständigkeit kann durch dem Fachmann bekannte Antioxidantien verbessert werden wie bespielsweise N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD), Enol Ether oder cyclische Acetale.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel kann die erfindungsgemäße Kautschukmischung alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die Vernetzung der Kautschukmischung kann sowohl mit Schwefel-Beschleuniger Systemen als auch mit Peroxiden erfolgen.

Als Vernetzer kommen z.B. peroxidische Vernetzer in Frage wie Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)buten, 4,4-Di-tert-butyl peroxynonylvalerat, Dicumylperoxid, 2,5-Dimethyl-2,5-di(tert-butylperoxy)hexan, tert-Butylcumylperoxid, 1,3-Bis(t-butylperoxyisopropyl) benzol, Di-tert-butylperoxid und 2,5-Dimethyl-2,5-di(tert-butylperoxy)-3-hexin.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N'-m-Phenylendimaleinimid geeignet.

Als Vernetzer kann auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Kautschukmischungs ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Als Zusätze, mit deren Hilfe die Vernetzungsausbeute erhöht werden kann, eignen sich z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate.

Ebenso als Zusätze geeignet sind beispielsweise: Zinkdiamindiisocyanat, Hexamethylentetramin, 1,3-Bis(citraconimidomethyl)benzol sowie zyklische Disulfane.

In der erfindungsgemäßen Kautschukmischung wird das Schwefel-Beschleuniger-System bevorzugt.

Um die Entflammbarkeit zu vermindern und die Rauchentwicklung beim Verbrennen zu verringern, kann die erfindungsgemäße Kautschukmischungszusammensetzung auch Flammschutzmittel enthalten. Als Flammschutzmittel werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Das Kautschukvulkanisat kann auch weitere Kunststoffe enthalten, die beispielsweise als polymere Verarbeitungshilfsmittel oder Schlagzähigkeitsverbesserer wirken. Diese Kunststoffe werden ausgewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1-bis C10-Alkoholen. Zu nennen sind insbesondere Polyacrylate mit gleichen oder verschiedenen Alkoholresten aus der Gruppe der C4- bis C8-Alkohole, besonders des Butanols, Hexanols, Octanols und 2-Ethylhexanols, Polymethylmethacrylat, Methyl-methacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere.

Das erfindungsgemäße Kautschukvulkanisat kann zur Herstellung von Schaumstoffen verwendet werden. Dazu werden ihr chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitroso-pentamethylentetramin, Zinkcarbonat oder Natriumhydrogencarbonat sowie diese Substanzen enthaltende Mischungen. Als physikalisch wirkende Treibmittel sind beispielsweise Kohlendioxid oder Halogenkohlenwasserstoffe geeignet.

Die Vulkanisation kann bei Temperaturen von 100 - 200 °C, vorzugsweise 130 - 180 °C, gegebenenfalls unter einem Druck von 10 - 200 bar erfolgen.

Die Abmischungen des Kautschuks mit dem Füllstoff und den Polysulfid Additiven der Formel (I) kann in üblichen Mischaggregaten, wie Walzen, Innenmischer und Mischextruder, durchgeführt werden.

Die erfindungsgemäßen Kautschukvulkanisate eignen sich zur Herstellung von Formkörpern mit verbesserten Eigenschaften, z.B. für die Herstellung von Kabelmäntel, Schläuchen, Treibriemen, Förderbändern, Walzenbelägen, Reifen, Schuhsohlen, Dichtungsringe und Dämpfungselemente.

Bei der Verarbeitung von Kautschuken ist es wichtig, dass die zunächst zubereitete Kautschukmischung mit den Additiven eine niedrige Fließviskosität (Mooney Viskosität ML 1+4/100°C) hat, damit sie leicht verarbeitet werden kann. In vielen Anwendungen soll die anschließende Vulkanisation (beispielsweise bei 170°C, t95) der Kautschukmischung unter Wärmeeinfluss möglichst schnell ablaufen, um so den Zeit- und Energieaufwand zu begrenzen.

Je nach Formgebung soll die Anvulkanisationszeit (beispielsweise t5) in einem engen Zeitfenster erfolgen, insbesondere > 300 Sekunden und < 500 Sekunden.

Vorzugsweise weist ein aus der erfindungsgemäßen Kieselsäurehaltigen Kautschukmischung bei 170°C/t95 geheiztes, hergestelltes Vulkanisat einen Verlustfaktor tan delta bei 60°C von < 0,13 und gleichzeitig eine Härte Shore A bei 23°C von > 60 auf, besonders bevorzugt einen Verlustfaktor tan delta bei 60°C von < 0,12 und gleichzeitig eine Härte Shore A bei 23°C von > 60. Das Vulkanisat weist einen Modul 300-Wert von > 12 MPa, vorzugsweise > 15 MPa auf, insbesondere > 20 MPa.

Vorzugsweise weist ein aus der kieselsäurehaltigen Kautschukmischung bei 170°C/t95 geheiztes, hergestelltes Vulkanisat einen Verlustfaktor tan delta bei 60°C von kleiner 0,12 und gleichzeitig eine Anvulkanisationszeit von größer 300 Sekunden auf, aber kleiner 1000 Sekunden.

Vorzugsweise weist ein aus der kieselsäurehaltigen Kautschukmischung bei 170°C/t95 geheiztes, hergestelltes Vulkanisat einen Verlustfaktor tan delta bei 60°C von kleiner 0,12 und gleichzeitig eine Ausvulkanisationszeit von kleiner 1000 Sekunden auf, vorzugsweise von kleiner 500 Sekunden.

Vorzugsweise weist ein aus der kieselsäurehaltigen Kautschukmischung bei 170°C/t95 geheiztes, hergestelltes Vulkanisat eine Anvulkanisationszeit von größer 300 Sekunden und gleichzeitig eine Ausvulkanisationszeit von kleiner 500 Sekunden auf.

Eine weitere Erfindung ist die Verwendung der erfindungsgemäßen kieselsäurehaltigen Kautschukmischung zur Herstellung von Vulkanisaten und Kautschukformkörper aller Art, insbesondere zur Herstellung von Reifen und Reifenbauteilen.

Ein weiterer Gegenstand der Erfindung ist eine Additiv-Mischung enthaltend ein oder mehrere Polysulfid Additive der Formel (I) und 1,6-Bis(N,N-dibenzylthiocarbamoyldithio)hexan (CAS-Nr.: 151900-44-6).

Vorzugsweise weist die Additiv-Mischung 10 bis 90 Gewichtsteile eines oder mehrerer Polysulfid Additive der Formel (I) bezogen auf 100 Gewichtsteile Additiv-Mischung und 10 bis 90 Gewichtsteile, bezogen auf 100 Gewichtsteile Additiv-Mischung, 1,6-Bis(N,N-dibenzylthiocarbamoyldithio)hexan (CAS-Nr.: 151900-44-6) auf.

Bevorzugt weist die erfindungsgemäße Additiv-Mischung ein Gewichtsverhältnis von einem oder mehreren Polysulfid Additiven der Formel (I) zu 1,6-Bis(N,N-dibenzylthiocarbamoyldithio)hexan (CAS-Nr.: 151900-44-6) von 10 : 90 bis 90 :10, insbesondere von 25 : 75 bis 75 : 25 auf.

Spätestens seit sich die Europäische Union mit den Grenzwerten für den Kohlendioxidausstoß durch Pkws befasst, suchen die Automobilhersteller nach wirtschaftlichen Möglichkeiten, um die Zielmarke von höchstens 130 g/km CO₂-Emission zu erreichen. Wesentliche Bedeutung kommt dabei rollwiderstandsarmen Reifen zu. Sie leisten beim Abrollen weniger Verformungsarbeit und senken deshalb den Kraftstoffverbrauch.

Damit die Verminderung des Rollwiderstands nicht auf Kosten anderer wichtiger Eigenschaften geschieht, werden zugleich auch die Anforderungen an die Nasshaftung und das Rollgeräusch festgelegt. Einen ersten Hinweis auf Nassrutschverhalten und Rollwiderstand gibt der Verlustfaktor tan delta. Bei 0 °C sollte dieser möglichst hoch sein (gute Nassrutschfestigkeit), bei 60 bis 70 °C möglichst niedrig (niedriger Rollwiderstand). Die Härte eines Kautschukvulkanisates gibt einen ersten Hinweis über dessen Steifigkeit wieder.

### Polysulfidadditiv-Beispiele

### Beispiel 1

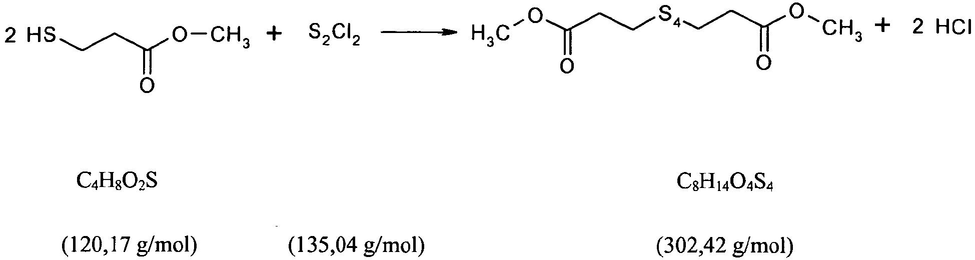

| | | |
|---|---|---|
| Apparatur: | 500ml Vierhalskolben mit Thermometer, Tropftrichter mit Druckausgleich, Rückflusskühler mit Gasableitungsansatz (Blasenzähler) und Schlauch, Rührwerk, | |
| Vorlage: | 91,75 g = 0,75 mol | 3-Mercaptopropionsäuremethylester (Acros, ≥ 98%) |
| | 250 ml | Cyclohexan (p.A., Fa. Merck über Molekularsieb getrocknet) |
| Zulauf: | 51,15 g = 0,375 mol | Dischwefeldichlorid (≥ 99%, Fa. Merck) |

In der stickstoffgespülten Apparatur werden getrocknetes Cyclohexan und 3-Mercaptopropionsäuremethylester vorgelegt. Wenn der 3-Mercaptopropionsäuremethylester vollständig gelöst ist, wird das Dischwefeldichlorid unter Stickstoffdurchleitung bei einer Temperatur von 5-10°C innerhalb von ca. einer 1h zugetropft. Die Dosiergeschwindigkeit ist so einzustellen, dass eine Temperatur von 10°C nicht überschritten wird.

Nach beendeter Reaktion wird unter Stickstoffdurchleitung bei Raumtemperatur über Nacht nachgerührt.

Anschließend wird die Reaktionslösung am Rotavapor bei 50°C einrotiert und im Vakuumtrockenschrank bei 60°C bis zur Gewichtskonstanz nachgetrocknet.

Ausbeute: 108,4 g (95,6%) einer Polysulfidmischung der idealisierten Formel

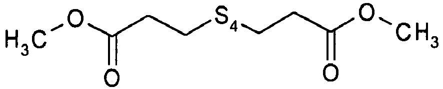

### Beispiel 2

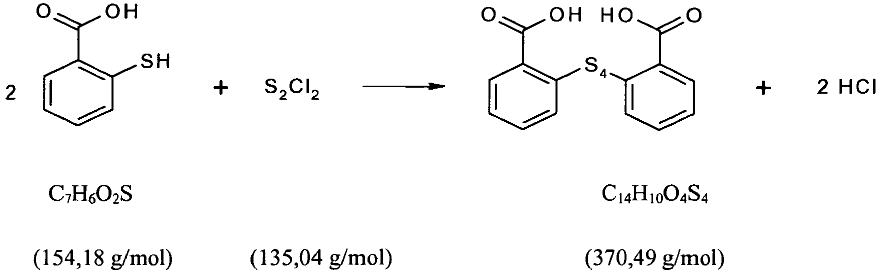

| | | |
|---|---|---|
| Apparatur: | 2000ml Vierhalskolben mit Thermometer, Tropftrichter mit Druckausgleich, Rückflusskühler mit Gasableitungsansatz (Blasenzähler) und Schlauch, Rührwerk, Gaseinleitungsrohr | |
| Vorlage: | 118,0 g = 0,75 mol | Mercaptobenzoesäure (Aldrich, ≥ 99%) |
| | 900 ml | Toluol (p.A., Fa. Aldrich über Molekularsieb getrocknet |
| Zulauf: | 51,15 g = 0,375 mol | Dischwefeldichlorid (≥ 99%, Fa. Merck) |

In der stickstoffgespülten Apparatur werden getrocknetes Toluol und Mercaptobenzoesäure vorgelegt. In die vorliegende Suspension wird nun das Dischwefeldichlorid unter Stickstoffdurchleitung bei einer Temperatur von 0-5°C innerhalb von ca. einer 1h zugetropft. Die Dosiergeschwindigkeit ist so einzustellen, dass eine Temperatur von 5°C nicht überschritten wird.

Nach beendeter Reaktion wird unter Stickstoffdurchleitung bei Raumtemperatur über Nacht nachgerührt.

Anschließend wird die Reaktionslösung über eine D4-Fritte abgesaugt und 2x mit ca. 200ml getrocknetem Toluol nachgewaschen. Das Produkt wird bei Raumtemperatur (ca. 25°C) im Vakuumtrockenschrank getrocknet.

Ausbeute: 144,6 g (104,1%) einer Polysulfidmischung der idealisierten Formel

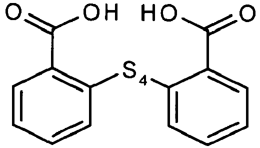

### Beispiel 3

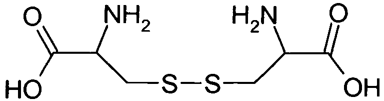

### Ergebnisse:

Anhand der nachfolgenden Beispiele wird die Erfindung näher erläutert, ohne dass dadurch eine Einschränkung der Erfindung bewirkt werden soll.

Für die Prüfungen wurden folgende Kautschuk-Rezepturen gewählt, die in Tabelle 1 aufgeführt sind. Alle Zahlenangaben, sofern nichts anderes vermerkt, beziehen sich auf "parts per hundred rubber" (phr).

In einem 1,5L Innenmischer (70UpM), Starttemperatur 80°C, Mischzeit: 5 Minuten, wurden die nachfolgenden Kautschukmischungen hergestellt. Schwefel und Beschleuniger wurden zum Schluss auf einer Walze (Temperatur: 50°C) zugemischt.

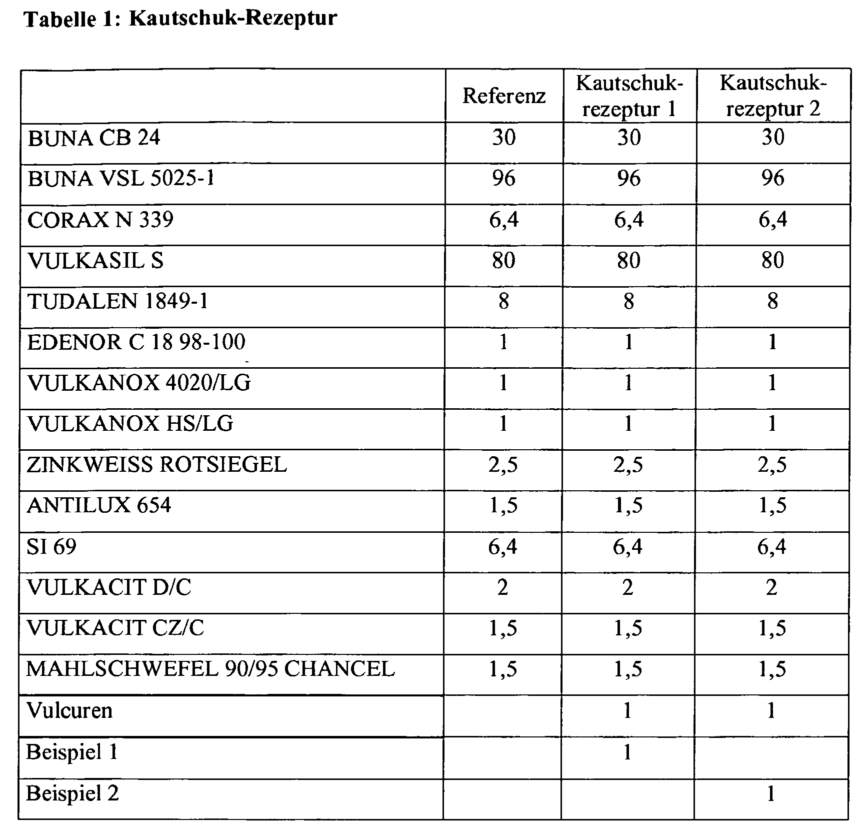

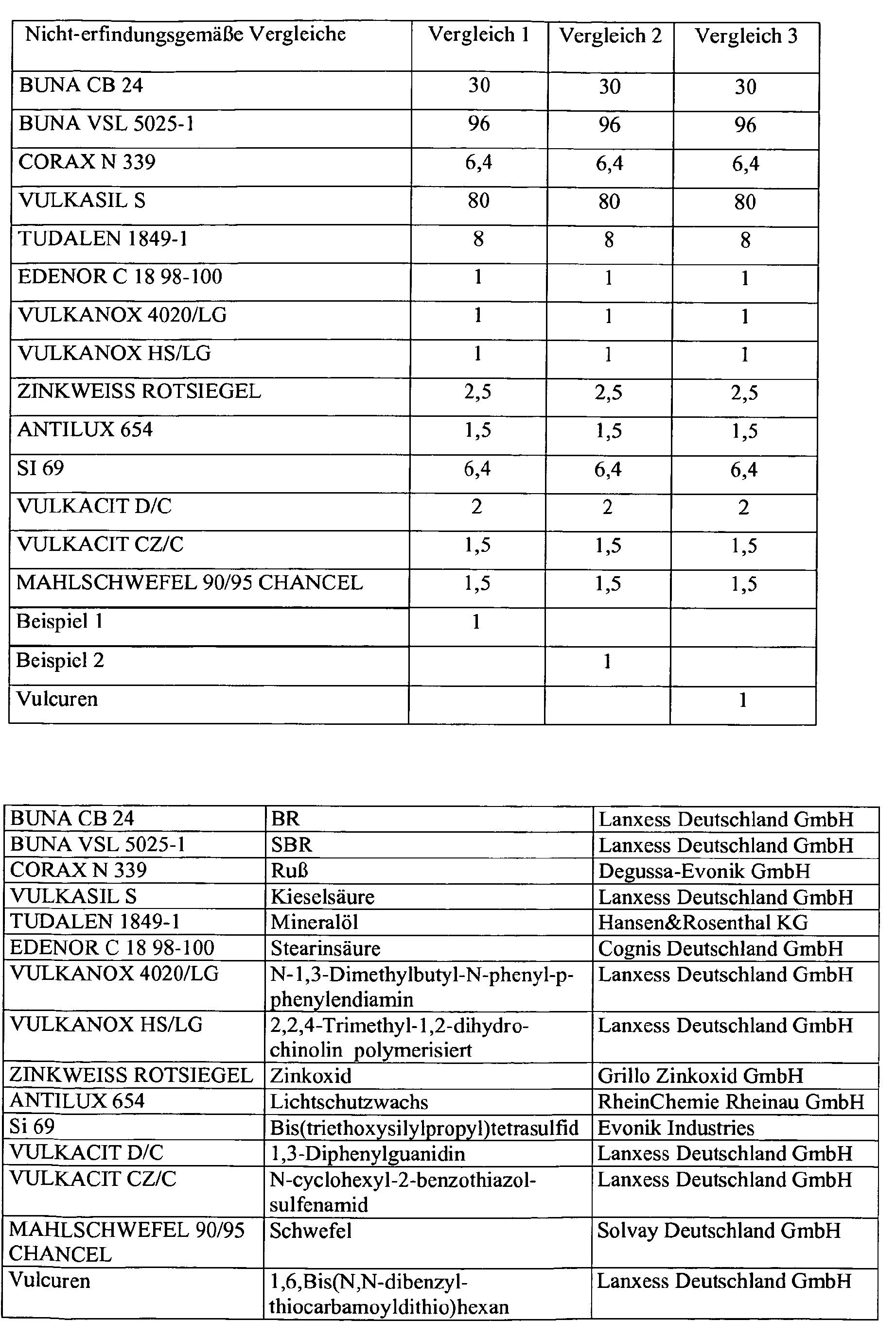

**Tabelle 2: Zusammenstellung der Ergebnisse**

| Parameter | Einheit | DIN | Referenz | Kautschukrezeptur 1 | Kautschukrezeptur 2 |
|---|---|---|---|---|---|
| | | | | | |
| Mooney Viskosität (ML 1+4) | [ME] | 53523 | 95 | 125 | 147 |
| Mooney Anvulkanisation bei 130°C (t5) | sec | acc. to ASTM D 5289-95 | 1253 | 346 | 461 |
| Ausvulkanisation bei 170°C / t95 | s | 53529 | 1417 | 246 | 290 |
| Shore A Härte bei 23°C | [Shore A] | 53505 | 66 | 65 | 65 |
| Modul 300 | MPa | 53504 | 15 | 21 | 21 |
| Bruchdehnung | % | 53504 | 349 | 327 | 303 |
| Zugfestigkeit | MPa | 53504 | 19 | 19 | 21 |
| Abrieb | mm³ | 53516 | 74 | 64 | 65 |
| Nassrutschverhalten (tan d (0°C)) | - | | 0,463 | 0,386 | 0,437 |
| Rollwiderstand (tan d (60 °C)) | - | | 0,133 | 0,116 | 0,111 |

Wie die Ergebnisse in Tabelle 2 zeigen, konnte überraschend gefunden werden, dass bei den erfindungsgemäßen Beispielen (Kautschukrezeptur 1 und Kautschukrezeptur 2) eine deutlich kürzere Anvulkanisationszeit (130°C/t5) im Vergleich zur Referenz gemessen wurde. Die mechanischen Eigenschaften wie Zugfestigkeit, Bruchdehnung und insbesondere der Modul 300 sind sehr gut. Die getesteten Vulkanisate zeigen ein gutes Nassrutschverhalten und einen deutlich verbesserten Rollwiderstand zur Referenz (tan delta bei 0°C > 0,35 und tan delta bei 60°C < 0,13) und ebenfalls sehr vorteilhafte Abriebwerte (< 70 mm³). Die Ausvulkanisationszeit wurde deutlich verbessert.

**Tabelle 2a: Zusammenstellung der Ergebnisse der Vergleiche**

| Parameter | Einheit | DIN | Vergleich 1 | Vergleich 2 | Vergleich 3 |
|---|---|---|---|---|---|
| | | | | | |
| Mooney Viskosität (ML 1+4) | [ME] | 53523 | 82 | 92 | 106 |
| Mooney Anvulkanisation bei 130°C (t5) | sec | acc. to ASTM D 5289-95 | 1244 | 1228 | 551 |
| Ausvulkanisation bei 170°C / t95 | s | 53529 | 1617 | 1315 | 262 |
| Shore A Härte bei 23°C | [Shore A] | 53505 | 72 | 73 | 65 |
| Modul 300 | MPa | 53504 | 17 | 18 | 19,5 |
| Bruchdehnung | % | 53504 | 346 | 308 | 313 |
| Zugfestigkeit | MPa | 53504 | 20 | 18 | 20,5 |
| Abrieb | mm³ | 53516 | 95 | 93 | 78 |
| Nassrutschverhalten (tan d (0°C)) | - | | 0,444 | 0,452 | 0,434 |
| Rollwiderstand (tan d (60 °C)) | - | | 0,168 | 0,154 | 0,112 |

Wie die Ergebnisse in Tabelle 2 und 2a zeigen, konnte überraschend gefunden werden, dass bei den erfindungsgemäßen Beispielen eine deutlich kürzere Anvulkanisationszeit (130°C/t5) als bei den Vergeichsbeispielen gemessen wurde. Die erfindungsgemäßen Vulkanisate zeigen bessere Modul 300 - Werte und einen exzellenten Rollwiderstand. Besonders überraschend sind die sehr vorteilhaften Abriebwerte (< 70 mm³) der erfindungsgemäßen Beispiele. Der Abrieb der erfindungsgemäßen Beispiele konnte um 20% gegenüber Vergleichsbeispiel 3 verbessert werden. Gemessen an den Abriebwerten der Vergleichsbeispiele 1 und 2 ist das mit den erfindungsgemäßen Beispielen erreichte Verbesserungspotential über 40%.

### Prüfungen der Kautschukmischung und der Vulkanisate:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird."

Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

Die Viskositäten, der in Tabelle 1 genannten Kautschukmischungen, werden mittels Scherscheibenviskosimeter nach Mooney gemessen.

### Scorch-Verhalten (Anvulkanisationszeit t 5):

Des Weiteren kann mit der gleichen Prüfung wie oben beschrieben auch das "Scorch"-Verhalten einer Mischung gemessen werden. Die gewählte Temperatur ist in diesem Patent 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (hier Einheit Sekunden), umso langsamer findet die Anvulkanisation statt (hier hohe Scorch-Werte).

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Die Ergebnisse dieser Prüfung sind in Tabelle 2 zusammengestellt.

Bei der Ausvulkanisationszeit, wird die Zeit gemessen, bei der 95% des Kautschuks vernetzt ist. Die gewählte Temperatur war 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A -Werte mittels eines digitalen Shore-Härte-Testers (Zwick GmbH & Co. KG, Ulm) bestimmt wurden.

### Zugversuch:

Der Zugversuch dient direkt zur Ermittlung der Belastungsgrenzen eines Elastomers. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

Die Prüfergebnisse sind in Tabelle 2 aufgeführt.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan delta indirekt über das Verhältnis zwischen Verlustmodul G" und Speichermodul G' bestimmt.

## Patentansprüche

1. Kieselsäurehaltige Kautschukmischung, hergestellt aus mindestens einem Kautschuk, einem schwefelhaltigen Alkoxysilan, einem Vernetzer, einem Füllstoff, gegebenenfalls weiteren Kautschukhilfsprodukten, **dadurch gekennzeichnet, dass** diese Mischung 0,1 bis 15 Gew.-Teile, bezogen auf 100 Gewichtsteile an eingesetztem Kautschuk, eines Polysulfid Additivs der Formel (I) enthält
A-S-(S)ₓ-S-B (I)
worin x für 0, 1, 2, 3 oder 4 steht,
A für einen Rest 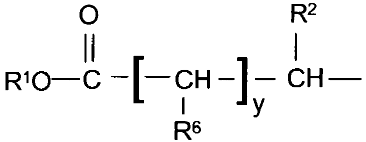 und
B für einen Rest 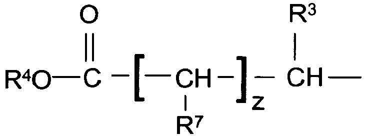 worin
R¹ bis R⁴ gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵-, -COR⁵, -COOR⁵,-CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und
R⁶ bis R⁷ gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵, -COOR⁵,-CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten und
y, z unabhängig voneinander für 0, 1 oder 2 stehen bzw.
A und B unabhängig voneinander für einen der Reste 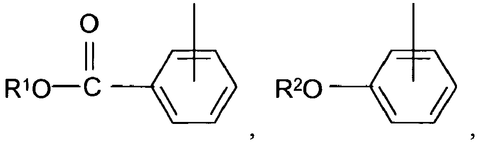 steht,
worin R¹ und R² gleich oder verschieden sind und Wasserstoff, C₁-C₆-Alkyl, C₅-C₆-Cycloalkyl, C₆-C₁₀-Aryl oder eine Gruppe -CH₂-OR⁵, -CH₂-CH₂-OR⁵, -NHR⁵, -COR⁵,-COOR⁵, -CH₂COOR⁵, mit R⁵ = Wasserstoff, C₁-C₆-Alkyl, C₅-C₆-Cycloalkyl, C₆-C₁₀-Aryl oder C₁-C₆-Acyl bedeuten,
und 0,1 bis 15 Gew. -Teile, bezogen auf 100 Gewichtsteile an eingesetztem Kautschuk, 1,6-Bis(N,N-dibenzylthiocarbamoyldithio)hexan (CAS-Nr.: 151900-44-6) aufweist.

2. Kieselsäurehaltige Kautschukmischung nach Anspruch 1, **dadurch gekennzeichnet, dass** als Polysulfid-Additiv wenigstens eine der Verbindungen der Formeln (II) verwendet wird, 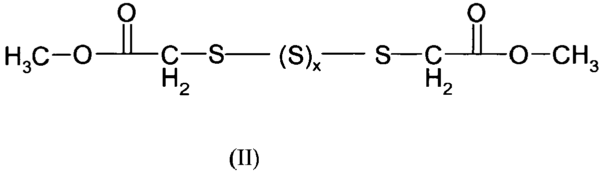 worin x für 0, 1, 2, 3 oder 4 steht, besonders bevorzugt für 2 steht.

3. Kieselsäurehaltige Kautschukmischung nach Anspruch 1, **dadurch gekennzeichnet, dass** als Polysulfid-Additiv wenigstens eine der Verbindungen der Formeln (IIa) verwendet wird, 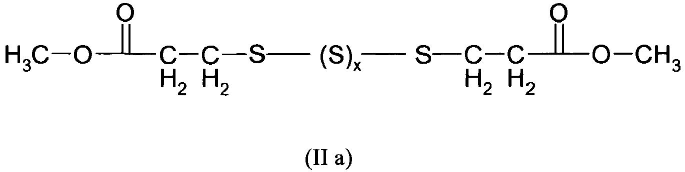 worin x für 0, 1, 2, 3 oder 4 steht, besonders bevorzugt für 2 steht.

4. Kieselsäurehaltige Kautschukmischung nach Anspruch 1, **dadurch gekennzeichnet, dass** als Polysulfid-Additiv wenigstens eine Verbindung der Formel (III), (IIIa), (IIIb) verwendet wird, 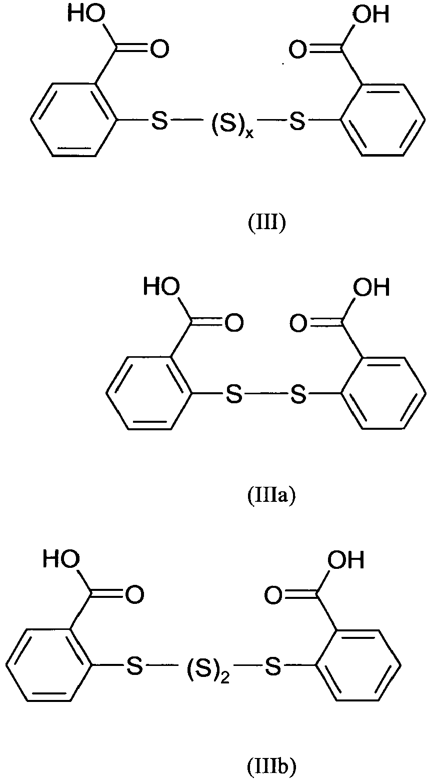 worin x für 0, 1, 2, 3 oder 4 steht, besonders bevorzugt für 2 steht.

5. Kieselsäurehaltige Kautschukmischung nach Anspruch 1, **dadurch gekennzeichnet, dass** als Polysulfid-Additiv wenigstens eine Verbindung der Formel (IV) verwendet wird.

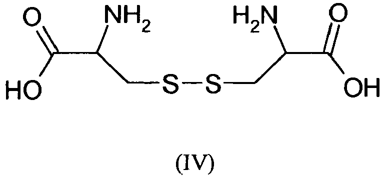

6. Kieselsäurehaltige Kautschukmischung nach einem der vorgenannten Ansprüche, **dadurch gekennzeichnet, dass** die Menge an schwefelhaltigen Alkoxysilanen größer oder gleich ist als die Menge an Polysulfid-Additiven der Formel (I).

7. Kieselsäurehaltige Kautschukmischung nach einem der vorgenannten Ansprüche, **dadurch gekennzeichnet, dass** sie mindestens einen SBR-Kautschuk und mindestens einen BR-Kautschuk enthält, vorzugsweise im Gewichts-Verhältnis SBR:BR von 60:40 bis 90:10.

8. Kieselsäurehaltige Kautschukmischung nach Anspruch 7, **dadurch gekennzeichnet, dass** sie zusätzlich mindestens einen NR-Kautschuk enthält.

9. Kieselsäurehaltige Kautschukmischung nach einem der vorgenannten Ansprüche, **dadurch gekennzeichnet, dass** sie 1 bis 15 Gewichtsteile eines oder mehrerer schwefelhaltiger Alkoxysilane bezogen auf 100 Gewichtsteile an eingesetztem Kautschuk enthält, wobei vorzugsweise das Gewichtsverhältnis von schwefelhaltigem Alkoxysilan zu Polysulfid Additiv der Formel (I) im Bereich von 1,5:1 bis 20:1, besonders bevorzugt 5:1 bis 15:1 liegt.

10. Kieselsäurehaltige Kautschukmischungen nach einem der vorgenannten Ansprüche, **dadurch gekennzeichnet, dass** sie 0,3 bis 7 Gewichtsteile eines oder mehrerer Polysulfid Additive der Formel (I) bezogen auf 100 Gewichtsteile eingesetztem Kautschuk und 0,3 bis 7 Gewichtsteile, bezogen auf 100 Gewichtsteile eingesetztem Kautschuk, 1,6-Bis(N,N-dibenzylthiocarbamoyldithio)hexan (CAS-Nr.: 151900-44-6) enthält.

11. Kieselsäurehaltige Kautschukmischung nach einem der vorgenannten Ansprüche, **dadurch gekennzeichnet, dass** diese Mischung 0,5 bis 5 Gew.-Teile, bezogen auf 100 Gewichtsteile an eingesetztem Kautschuk eines Polysulfid Additivs der Formel (I) und 0,5 bis 5 Gewichtsteile, bezogen auf 100 Gewichtsteile an eingesetztem Kautschuk, 1,6-Bis(N,N-dibenzylthiocarbamoyldithio)hexan (CAS-Nr.: 151900-44-6) enthält.

12. Kieselsäurehaltige Kautschukmischung nach einem der vorgenannten Ansprüche, **dadurch gekennzeichnet, dass** sie einen oder mehrere anorganische und/oder organische Füllstoffe aufweist, wobei die Füllstoffe im Bereich von 50 bis 200 Gewichtsteile, vorzugsweise 60 bis 120 Gewichtsteile, bezogen auf 100 Gewichtsteile an eingesetzten Kautschuken verwendet werden.

13. Kieselsäurehaltige Kautschukmischung nach Anspruch 12, **dadurch gekennzeichnet, dass** die Füllstoffe aus der Gruppe oxidische, silikatische Füllstoffe und Russe oder deren Mischungen ausgewählt werden.

14. Kieselsäurehaltige Kautschukmischung nach Anspruch 13, **dadurch gekennzeichnet, dass** wenigstens ein Füllstoff ausgewählt wird aus der Gruppe gefällter Kieselsäuren und/oder Silikaten mit einer spezifischen Oberfläche von 20 bis 400 m²/g, vorzugsweise mit einer spezifischen Oberfläche von 100 bis 200 m²/g.

15. Verwendung der Kautschukmischung nach einem der vorgenannten Ansprüche zur Herstellung von Vulkanisaten und Kautschukformkörper aller Art, insbesondere zur Herstellung von Reifen und Reifenbauteilen.

16. Vulkanisate und Kautschukformkörper aller Art, insbesondere Reifen und Reifenbauteile basierend auf Kautschukmischungen nach einem der Ansprüche 1 bis 14.

17. Verfahren zur Herstellung einer Kieselsäurehaltigen Kautschukmischung nach einem der Ansprüche 1 bis 14, **dadurch gekennzeichnet, dass** in einem Mischprozess mit mehreren Mischstufen, wobei diese ggf. in mehrere Teilschritte unterteilt sein können, umfassend das Mischen wenigstens folgender Komponenten
∘ ein oder mehrere Kautschuke,
∘ ein oder mehrere hydroxylgruppenhaltige oxidische Füllstoffe,
∘ ein oder mehrere schwefelhaltige Alkoxysilane,
∘ ein oder mehrere Vulkanisationsadditive,
∘ ein oder mehrere Kautschukadditive,
wenigstens ein Polysulfid Additiv nach einem der Ansprüche 1 bis 5 und 1,6-Bis(N,N-dibenzylthiocarbamoyldithio)hexan (CAS-Nr.: 151900-44-6) in der ersten Mischstufe eingemischt werden.

18. Additiv-Mischung enthaltend ein oder mehrere Polysulfid Additive der in Anspruch 1 definierten Formel (I) und 1,6-Bis(N,N-dibenzylthiocarbamoyldithio)hexan (CAS-Nr.: 151900-44-6), wobei 10 bis 90 Gewichtsteile eines oder mehrerer Polysulfid Additive der Formel (I) bezogen auf 100 Gewichtsteile Additiv-Mischung und 10 bis 90 Gewichtsteile, bezogen auf 100 Gewichtsteile Additiv-Mischung, 1,6-Bis(N,N-dibenzylthiocarbamoyldithio)hexan (CAS-Nr.: 151900-44-6) enthalten sind.

## Claims

1. Silica-containing rubber mixture produced from at least one rubber, one sulphur-containing alkoxysilane, one crosslinking agent, one filler, and optionally further rubber auxiliary products, **characterized in that** this mixture comprises from 0.1 to 15 parts by weight, based on 100 parts by weight of rubber used, of a polysulphide additive of the formula (I)
A-S-(S)ₓ-S-B (I)
where x is 0, 1, 2, 3 or 4,
A is a moiety 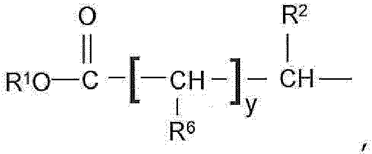 and
B is a moiety 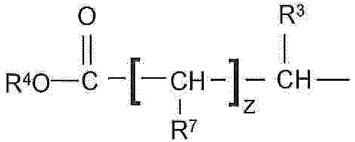 where
R¹ to R⁴ are identical or different and are hydrogen, C₁-C₆-alkyl, C₅-C₆-cycloalkyl, C₆-C₁₀-aryl or a group -CH₂-OR⁵, -CH₂-CH₂-OR⁵, -NHR⁵, -COR⁵, -COOR⁵, -CH₂COOR⁵, where R⁵ = hydrogen, C₁-C₆-alkyl, C₅-C₆-Cycloalkyl, C₆-C₁₀-aryl or C₁-C₆-acyl, and
R⁶ to R⁷ are identical or different and are hydrogen, C₁-C₆-alkyl, C₅-C₆-cycloalkyl, C₆-C₁₀-aryl or a group -CH₂-OR⁵, -CH₂-CH₂-OR⁵, -NHR⁵, -COR⁵,-COOR⁵, -CH₂COOR⁵, where R⁵ = hydrogen, C₁-C₆-alkyl, C₁-C₆-cycloalkyl, C₆-C₁₀-aryl or C₁-C₆-acyl and
y and z independently of one another are 0, 1 or 2, or
A and B independently of one another are one of the radicals 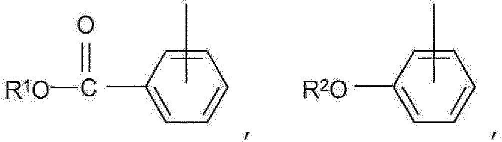
in which R¹ and R² are identical or different and are hydrogen, C₁-C₆-alkyl, C₅-C₆-cycloalkyl, C₆-C₁₀-aryl or a group -CH₂-OR⁵, CH₂-CH₂-OR⁵, -NHR⁵, -COR⁵, -COOR⁵, -CH₂COOR⁵, where R⁵ = hydrogen, C₁-C₆-alkyl, C₅-C₆-cycloalkyl, C₆-C₁₀-aryl or C₁-C₆-acyl,
and comprises from 0.1 to 15 parts by weight, based on 100 parts by weight of rubber used, of 1,6-bis(N,N-dibenzylthiocarbamoyldithio)hexane (CAS No.: 151900-44-6).

2. Silica-containing rubber mixture according to Claim 1, **characterized in that** at least one of the compounds of the formulae (II) is used as polysulphide additive, 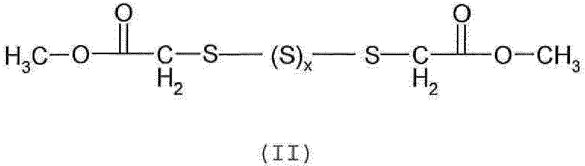 where x is 0, 1, 2, 3 or 4, particularly preferably 2.

3. Silica-containing rubber mixture according to Claim 1, **characterized in that** at least one of the compounds of the formulae (IIa) is used as polysulphide additive, 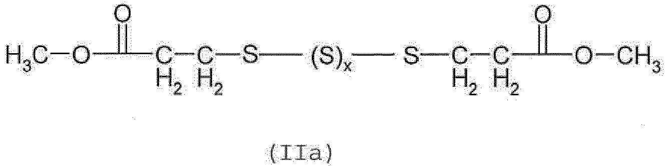 where x is 0, 1, 2, 3 or 4, particularly preferably 2.

4. Silica-containing rubber mixture according to Claim 1, **characterized in that** at least one compound of the formula (III), (IIIa), (IIIb) is used as polysulphide additive, 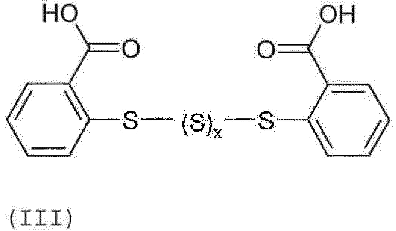 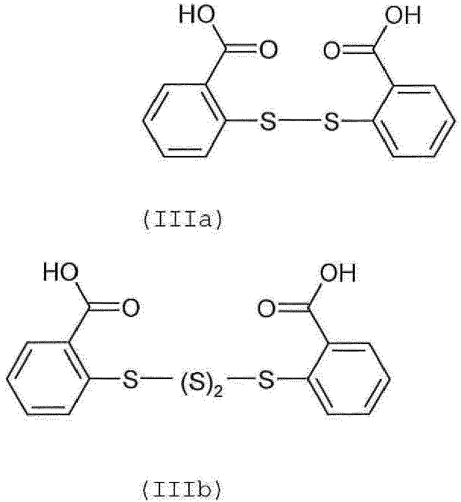 where x is 0, 1, 2, 3 or 4, particularly preferably 2.

5. Silica-containing rubber mixture according to Claim 1, **characterized in that** at least one compound of the formula (IV) is used as polysulphide additive.

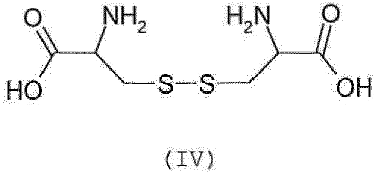

6. Silica-containing rubber mixture according to any of the preceding claims, **characterized in that** the quantity of sulphur-containing alkoxysilanes is greater than or equal to the quantity of polysulphide additives of the formula (I).

7. Silica-containing rubber mixture according to any of the preceding claims, **characterized in that** it comprises at least one SBR rubber and at least one BR rubber, preferably in a ratio by weight SBR:BR of from 60:40 to 90:10.

8. Silica-containing rubber mixture according to Claim 7, **characterized in that** it also comprises at least one NR rubber.

9. Silica-containing rubber mixture according to any of the preceding claims, **characterized in that** it comprises from 1 to 15 parts by weight of one or more sulphur-containing alkoxysilanes, based on 100 parts by weight of rubber used, where the ratio by weight of sulphur-containing alkoxysilane to polysulphide additive of the formula (I) is in the range from 1.5:1 to 20:1, particularly preferably from 5:1 to 15:1.

10. Silica-containing rubber mixtures according to any of the preceding claims, **characterized in that** it comprises from 0.3 to 7 parts by weight of one or more polysulphide additives of the formula (I), based on 100 parts by weight of rubber used, and from 0.3 to 7 parts by weight, based on 100 parts by weight of rubber used, of 1,6-bis(N,N-dibenzylthiocarbamoyldithio)hexane (CAS No.: 151900-44-6).

11. Silica-containing rubber mixture according to any of the preceding claims, **characterized in that** this mixture comprises 0.5 to 5 parts by weight, based on 100 parts by weight of rubber used, of a polysulphide additive of the formula (I) and from 0.5 to 5 parts by weight, based on 100 parts by weight of rubber used, of 1,6-bis(N,N-dibenzylthiocarbamoyldithio)hexane (CAS No.: 151900-44-6).

12. Silica-containing rubber mixture according to any of the preceding claims, **characterized in that** it comprises one or more inorganic and/or organic fillers, where the quantities used of the fillers are in the range from 50 to 200 parts by weight, preferably from 60 to 120 parts by weight, based on 100 parts by weight of rubbers used.

13. Silica-containing rubber mixture according to Claim 12, **characterized in that** the fillers are selected from the group of oxidic, silicatic fillers and carbon blacks and mixtures of these.

14. Silica-containing rubber mixture according to Claim 13, **characterized in that** at least one filler is selected from the group of precipitated silicas and/or silicates with specific surface area from 20 to 400 m²/g, preferably with specific surface area from 100 to 200 m²/g.

15. Use of the rubber mixture according to any of the preceding claims for the production of vulcanisates and rubber mouldings of any type, in particular for the production of tyres and tyre components.

16. Vulcanisates and rubber mouldings of any type, in particular tyres and tyre components based on rubber mixtures according to any of Claims 1 to 14.

17. Process for the production of a silica-containing rubber mixture according to any of Claims 1 to 14, **characterized in that** in a mixing process which has a plurality of mixing stages, where these can optionally be subdivided into a plurality of component steps, and which comprises the mixing of at least the following components
- one or more rubbers,
- one or more hydroxylated oxidic fillers,
- one or more sulphur-containing alkoxysilanes,
- one or more vulcanization additives,
- one or more rubber additives,
at least one polysulphide additive according to any of Claims 1 to 5 and 1,6-bis(N,N-dibenzylthiocarbamoyldithio)hexane (CAS No.: 151900-44-6) are incorporated by mixing in the first mixing stage.

18. Additive mixture comprising one or more polysulphide additives of the formula (I) defined in Claim 1 and 1,6-bis(N,N-dibenzylthiocarbamoyldithio)hexane (CAS No.: 151900-44-6), where from 10 to 90 parts by weight of one or more polysulphide additives of the formula (I), based on 100 parts by weight of additive mixture, and from 10 to 90 parts by weight, based on 100 parts by weight of additive mixture, of 1,6-bis(N,N-dibenzylthiocarbamoyldithio)hexane (CAS No.: 151900-44-6) are present.

## Revendications

1. Mélange de caoutchouc contenant de la silice, fabriqué à partir d'au moins un caoutchouc, un alcoxysilane contenant du soufre, un agent de réticulation, une charge, éventuellement d'autres produits adjuvants de caoutchouc, **caractérisé en ce que** ce mélange contient 0,1 à 15 parties en poids, par rapport à 100 parties en poids de caoutchouc utilisé, d'un additif polysulfure de formule (I)
A-S-(S)ₓ-S-B (I)
dans laquelle x représente 0, 1, 2, 3 ou 4,
A représente un radical 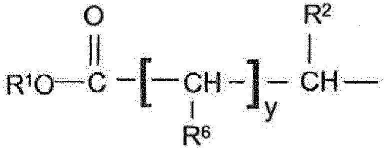 et
B représente un radical 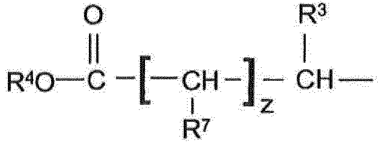 dans lesquels
R¹ à R⁴ sont identiques ou différents, et signifient hydrogène, allyle en C₁-C₆, cycloalkyle en C₅-C₆, aryle en C₆-C₁₀ ou un groupe -CH₂-OR⁵, -CH₂-CH₂-OR⁵,-NHR⁵, -COR⁵, -COOR⁵, -CH₂COOR⁵, avec R⁵ = hydrogène, allyle en C₁-C₆, cycloalkyle en C₅-C₆, aryle en C₆-C₁₀ ou acyle en C₁-C₆, et
R⁶ et R⁷ sont identiques ou différents, et signifient hydrogène, alkyle en C₁-C₆, cycloalkyle en C₅-C₆, aryle en C₆-C₁₀ ou un groupe -CH₂-OR⁵, -CH₂-CH₂-OR⁵, - NHR⁵, -COR⁵, -COOR⁵, -CH₂COOR⁵, avec R⁵ = hydrogène, alkyle en C₁-C₆, cycloalkyle en C₅-C₆, aryle en C₆-C₁₀ ou acyle en C₁-C₆, et
y, z représentent indépendamment l'un de l'autre 0, 1 ou 2, et
A et B représentent indépendamment l'un de l'autre un des radicaux 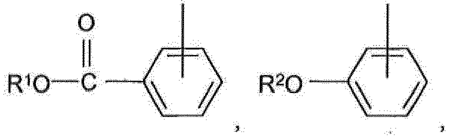
dans lesquels R¹ et R² sont identiques ou différents, et signifient hydrogène, alkyle en C₁-C₆, cycloalkyle en C₁-C₆, aryle en C₆-C₁₀ ou un groupe -CH₂-OR⁵, -CH₂-CH₂-OR⁵, -NHR⁵, -COR⁵, -COOR⁵, -CH₂COOR⁵, avec R⁵ = hydrogène, alkyle en C₁-C₆, cycloalkyle en C₅-C₆, aryle en C₆-C₁₀ ou acyle en C₁-C₆,
et 0,1 à 15 parties en poids, par rapport à 100 parties en poids de caoutchouc utilisé, de 1,6-bis(N,N-dibenzylthiocarbamoyldithio)hexane (n° CAS : 151900-44-6).

2. Mélange de caoutchouc contenant de la silice selon la revendication 1, **caractérisé en ce qu'**au moins un des composés des formules (II) est utilisé en tant qu'additif polysulfure 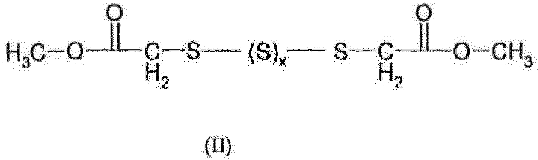 dans laquelle x représente 0, 1, 2, 3 ou 4, de manière particulièrement préférée 2.

3. Mélange de caoutchouc contenant de la silice selon la revendication 1, **caractérisé en ce qu'**au moins un des composés des formules (IIa) est utilisé en tant qu'additif polysulfure 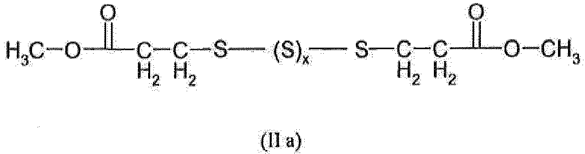 dans laquelle x représente 0, 1, 2, 3 ou 4, de manière particulièrement préférée 2.

4. Mélange de caoutchouc contenant de la silice selon la revendication 1, **caractérisé en ce qu'**au moins un composé de formule (III), (IIIa), (IIIb) est utilisé en tant qu'additif polysulfure 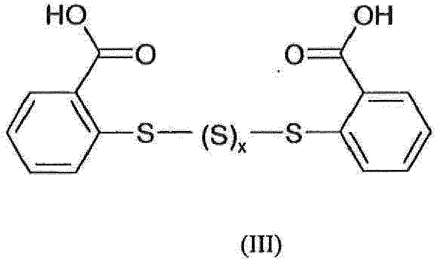 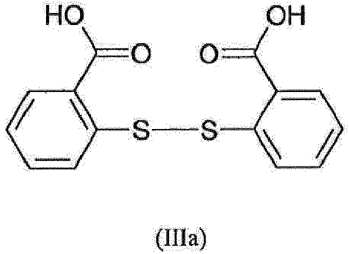 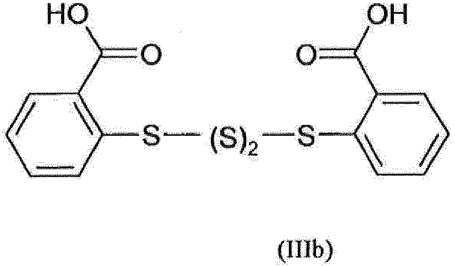 dans lesquelles x représente 0, 1, 2, 3 ou 4, de manière particulièrement préférée 2.

5. Mélange de caoutchouc contenant de la silice selon la revendication 1, **caractérisé en ce qu'**au moins un composé de formule (IV) est utilisé en tant qu'additif polysulfure

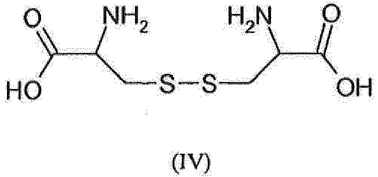

6. Mélange de caoutchouc contenant de la silice selon l'une quelconque des revendications précédentes, **caractérisé en ce que** la quantité d'alcoxysilanes contenant du soufre est supérieure ou égale à la quantité d'additifs polysulfure de formule (I).

7. Mélange de caoutchouc contenant de la silice selon l'une quelconque des revendications précédentes, **caractérisé en ce qu'**il contient au moins un caoutchouc SBR et au moins un caoutchouc BR, de préférence en un rapport en poids SBR:BR de 60:40 à 90:10.

8. Mélange de caoutchouc contenant de la silice selon la revendication 7, **caractérisé en ce qu'**il contient en outre au moins un caoutchouc NR.

9. Mélange de caoutchouc contenant de la silice selon l'une quelconque des revendications précédentes, **caractérisé en ce qu'**il contient 1 à 15 parties en poids d'un ou de plusieurs alcoxysilanes contenant du soufre, par rapport à 100 parties en poids de caoutchouc utilisé, le rapport en poids entre l'alcoxysilane contenant du soufre et l'additif polysulfure de formule (I) étant de préférence dans la plage allant de 1,5:1 à 20:1, de manière particulièrement préférée de 5:1 à 15:1.

10. Mélanges de caoutchouc contenant de la silice selon l'une quelconque des revendications précédentes, **caractérisé en ce qu'**il contient 0,3 à 7 parties en poids d'un ou de plusieurs additifs polysulfure de formule (I) par rapport à 100 parties en poids de caoutchouc utilisé et 0,3 à 7 parties en poids, par rapport à 100 parties en poids de caoutchouc utilisé, de 1,6-bis(N,N-dibenzylthiocarbamoyldithio)hexane (n° CAS : 151900-44-6).

11. Mélange de caoutchouc contenant de la silice selon l'une quelconque des revendications précédentes, **caractérisé en ce que** ce mélange contient 0,5 à 5 parties en poids, par rapport à 100 parties en poids de caoutchouc utilisé, d'un additif polysulfure de formule (I) et 0,5 à 5 parties en poids, par rapport à 100 parties en poids de caoutchouc utilisé, de 1,6-bis(N,N-dibenzylthiocarbamoyldithio)hexane (n° CAS : 151900-44-6).

12. Mélange de caoutchouc contenant de la silice selon l'une quelconque des revendications précédentes, **caractérisé en ce qu'**il contient une ou plusieurs charges inorganiques et/ou organiques, les charges étant utilisées dans la plage allant de 50 à 200 parties en poids, de préférence de 60 à 120 parties en poids, par rapport à 100 parties en poids de caoutchoucs utilisés.

13. Mélange de caoutchouc contenant de la silice selon la revendication 12, **caractérisé en ce que** les charges sont choisies dans le groupe constitué par les charges oxydiques, silicatées et les noirs de carbone ou leurs mélanges.

14. Mélange de caoutchouc contenant de la silice selon la revendication 13, **caractérisé en ce qu'**au moins une charge est choisie dans le groupe des silices précipitées et/ou des silicates ayant une surface spécifique de 20 à 400 m²/g, de préférence ayant une surface spécifique de 100 à 200 m²/g.

15. Utilisation du mélange de caoutchouc selon l'une quelconque des revendications précédentes pour la fabrication de vulcanisats et de corps moulés en caoutchouc de tout type, notamment pour la fabrication de pneus et de composants de pneus.

16. Vulcanisats et corps moulés en caoutchouc de tout type, notamment pneus et composants de pneus, à base de mélanges de caoutchouc selon l'une quelconque des revendications 1 à 14.

17. Procédé de fabrication d'un mélange de caoutchouc contenant de la silice selon l'une quelconque des revendications 1 à 14, **caractérisé en ce qu'**au moins un additif polysulfure selon l'une quelconque des revendications 1 à 5 et du 1,6-bis(N,N-dibenzylthiocarbamoyldithio)hexane (n° CAS : 151900-44-6) sont incorporés dans la première étape de mélange dans un procédé de mélange comprenant plusieurs étapes de mélange, celles-ci pouvant éventuellement être divisées en plusieurs étapes partielles, comprenant le mélange d'au moins les composants suivants :
- un ou plusieurs caoutchoucs,
- une ou plusieurs charges oxydiques contenant des groupes hydroxyle,
- un ou plusieurs alcoxysilanes contenant du soufre,
- un ou plusieurs additifs de vulcanisation,
- une ou plusieurs additifs de caoutchouc.

18. Mélange d'additifs contenant un ou plusieurs additifs polysulfure de formule (I) définie dans la revendication 1 et du 1,6-bis(N,N-dibenzylthiocarbamoyldithio)hexane (n° CAS : 151900-44-6), 10 à 90 parties en poids d'un ou de plusieurs additifs polysulfure de formule (I) par rapport à 100 parties en poids de mélange d'additifs et 10 à 90 parties en poids, par rapport à 100 parties en poids de mélange d'additifs, de 1,6-bis(N,N-dibenzylthiocarbamoyldithio)hexane (n° CAS : 151900-44-6) étant contenues.
